# EUROPÄISCHE PATENTANMELDUNG

(11) **EP 1 094 658 A2**
(43) Veröffentlichungstag der Anmeldung: **25.04.2001**
(21) Anmeldenummer: 00116470.6
(22) Anmeldetag: 29.07.2000
(51) Int. Cl.: H04M 15/00

(54) **Verfahren zum Aufbau von Sonderverbindungen in einem Telekommunikationsnetz und Telekommunikationssystem**

(30) Priorität: 13.08.1999 CH 149199; 11.01.2000 CH 45002000
(71) Anmelder: Kornfeind, Franz, 8706 Meilen (CH)
(72) Erfinder: Kornfeind, Franz, 8706 Meilen (CH)
(74) Vertreter: Rutz, Peter

(57) **Zusammenfassung**

Das erfindungsgemässe Verfahren dient zum Aufbau von Sonderverbindungen zwischen zwei an ein Telekommunikationsnetz (PSTN) angeschlossenen Teilnehmern (TE1, ..., TEn), die wahlweise über eine zum Aufbau von Sonderverbindungen geeignete Vermittlungsstelle (SPX) miteinander verbunden werden. Ein rufender Teilnehmer (TE1) wird, nach Eingabe der entsprechenden Rufnummer, zuerst mit der zum Aufbau von Sonderverbindungen geeigneten, über einen Rechner (PCP) mit einer Datenbank (DBP) verbundenen Vermittlungsstelle (SPX) verbunden, welche während einer ersten Zeitdauer in der Datenbank (DBP) gespeicherte Informationen an den rufenden Teilnehmer (TE1) überträgt und vor oder nach Übertragung der Informationen von der Datenbank (DBP), gegebenenfalls nach Eingabe einer weiteren Rufnummer, eine während einer zweiten Zeitdauer gebührenfreie Verbindung zu einem gerufenen Teilnehmer (TE2, ..., TEn) erstellt.

## Beschreibung

Die Erfindung betrifft ein Verfahren zum Aufbau von Sonderverbindungen in einem Telekommunikationsnetz sowie ein Telekommunikationssystem nach dem Oberbegriff des Patentanspruchs 1 bzw. 13.

Moderne Telekommunikationsnetze, beispielsweise das ISDN (Integrated Services Digital Network) erlauben den Aufbau von Sonderverbindungen zwischen zwei oder mehreren Teilnehmern. In [1], Peter Bocker, ISDN - Digitale Netze für Sprach-, Text-, Daten-, Video- und Multimediakommunikation, Springer Verlag, Berlin 1997, Kapitel 2.6.2.2, Seite 43 sind Sonderverbindungen beschrieben, bei denen der gerufene Teilnehmer die entstehenden Verbindungsgebühren vollumfänglich oder nur fallweise, vor oder während der Verbindung, übernimmt.

Zu den Grundlagen von ISDN siehe auch [2], Andrew S. Tanenbaum, Computer Networks, Prentice-Hall Inc., New Jersey 1989, Seiten 90 ― 109 oder [3], Andrew S. Tanenbaum, Computernetzwerke, Prentice-Hall Inc., München 1998, 3. Auflage, Seiten 162 ― 168.

Ein Telekommunikationsnetz, das verschiedene Informationsdienstmerkmale zur Verfügung stellt, erlaubt ferner die Übertragung von Auskünften zu einem Teilnehmer. Besonders leistungsfähig sind diesbezüglich Intelligente Netzwerke (Advanced Intelligent Networks (AIN)), die beispielsweise in [1], Seiten 273-276 oder in [4], U.S. Pat. No. 6,075,783 beschrieben ist.

Aus [4] sowie [5], M. Korpi & V. Kumar, Supplementary Services in the H.323 IP Telephony Network, IEEE Communications Magazine, July 1999, Seiten 118-125 ist ferner bekannt, dass Sprach-, Text-, Daten-, Video- und Multimediainformationen übergreifend zwischen leitungsvermittelnden und paketvermittelnden Fest- oder Mobilfunknetzen übertragbar sind (siehe auch [3], Seiten 396-399). Informationen können beispielsweise über das Mobilfunknetz, ein leitungsvermittelndes Netz wie das ISDN, das paketvermittelnde Internet, gegebenenfalls wieder das ISDN zu einem Teilnehmer oder zu einer Vermittlungsstelle übertragen werden.

Nebst dem gelegentlichen Bedarf eines Teilnehmers, Auskünfte und Informationen über das Telekommunikationsnetz von einer Datenbank abrufen zu können, besteht der Bedarf Dritter, Auskünfte und Informationen kostengünstig an Teilnehmer übertragen zu können, die für diesen von Interesse sind. Zu diesem Zweck werden Informationen beispielsweise mit beträchtlichem Aufwand auf Druckereierzeugnisse übertragen und an Teilnehmer versandt. Alternativ werden Informationen auch durch persönliche telefonische Kontaktaufnahme oder mittels Versand von Telefax-Mitteilungen übertragen. Nebst dem entsprechenden Aufwand, stossen diese Verfahren auf geringe Akzeptanz bei den Teilnehmern, letztere gar auf wettbewerbsrechtliche Hindernisse.

Der Bedarf des Teilnehmers betreffend die Übertragung von Informationen beschränkt sich vermehrt nicht mehr nur auf die Sprachkommunikation. Oft ist das Versenden oder der Austausch von Daten mit Text-, Bild- und/oder Toninformationen notwendig. Bekannt ist ferner, dass Teilnehmer von zentralen Datenanbietem oft auch Daten (beispielsweise Musik, Bilder, Videos und Software) in grossem Umfang herunterladen. Der Bedarf des Teilnehmers betrifft daher fallweise das Versenden, das Empfangen bzw. Herunterladen und/oder den Austausch (abwechslungsweises Senden und Empfangen) von Daten über beliebige Netze, zum Beispiel auch über Kabel-TV Netze. Dienstleister, die Teilnehmern den Zugang zum Internet ermöglichen, verrechnen dabei oft nicht die Verbindungszeit, sondern die transferierten Datenmengen.

Der Erfindung liegt daher die Aufgabe zugrunde, ein Verfahren zum Aufbau von Sonderverbindungen zwischen zwei Teilnehmern in einem Telekommunikationsnetz sowie ein entsprechendes Telekommunikationssystem anzugeben, welche erlauben, Informationen eines Dritten auf vorteilhafte Weise zumindest an den die Verbindung initialisierenden Teilnehmer zu übertragen.

Die Lösung dieser Aufgabe gelingt mit den in Anspruch 1 bzw. 13 angegebenen Massnahmen. Vorzugsweise Ausgestaltungen der Erfindung sind in weiteren Patentansprüchen angegeben.

Das erfindungsgemässe Verfahren erlaubt den Aufbau von Sonderverbindungen zwischen zwei an ein Telekommunikationsnetz angeschlossenen Teilnehmern, die wahlweise über eine zum Aufbau von Sonderverbindungen geeignete Vermittlungsstelle eines Dienstleisters miteinander verbunden werden, wobei ein rufender Teilnehmer, nach Eingabe einer entsprechenden Zieladresse, beispielsweise einer Rufnummer, zuerst mit der zum Aufbau von Sonderverbindungen geeigneten, über einen Rechner mit einer Datenbank verbundenen Vermittlungsstelle verbunden wird, welche während einer ersten Zeitdauer in der Datenbank gespeicherte Informationen an den rufenden Teilnehmer überträgt und danach eine entsprechende Gutschrift auf dem Gebührenkonto des rufenden Teilnehmers ablegt oder, gegebenenfalls nach Eingabe einer weiteren Zieladresse oder Rufnummer, eine während einer zweiten Zeitdauer gebührenfreie Verbindung zu einem gerufenen Teilnehmer erstellt.

Die Verbindung zur Vermittlungsstelle des Dienstleisters kann über beliebige leitungsvermittelnde oder paketvermittelnde Funknetze oder Festnetze, z.B. Telefonnetze wie das ISDN, Kabel-TV Netze und/oder das Internet, erfolgen. Die Datenströme, die von der Vermittlungsstelle zu einem rufenden Teilnehmer oder zwischen einem rufenden und einem gerufenen Teilnehmer übertragen werden, können Informationen in Form von Sprache, Text, Daten, Audio und/oder Video betreffen.

Die Nummer des rufenden Teilnehmers (calling party number) wird vorzugsweise ausgewertet und davon abhängig wird die zu übertragende Informationen von der Datenbank selektiert. Sofern Daten des rufenden Teilnehmers bereits in der Datenbank abgelegt sind, werden diese Daten vorzugsweise vom Rechner ausgelesen und mit dazu korrespondierenden Informationen verknüpft. Auf diese Weise können dem rufenden Teilnehmer besonders relevante Informationen übermittelt werden. Beispielsweise können kaufmännischen Angestellten Informationen über Dienstleistungen von Finanzinstituten oder Versicherungen übermittelt werden. Technischen Angestellten werden beispielsweise Informationen über Dienstleistungen von Informatikunternehmen übermittelt. Dadurch ergibt sich ein höherer Nutzen für den Anbieter, den Abnehmer und den Lieferanten der Informationen.

Da Teilnehmer nicht zu jeder Tageszeit und an jedem Ort mit denselben Informationen bedient werden möchten, werden Informationen vorzugsweise in Abhängigkeit der Übertragungsart, der Netzwerkeigenschaften, des Endgeräts des rufenden Teilnehmers, der Region, der Sprache, der Tageszeit und/oder des Datums selektiert.

Die selektierbaren Daten-, Text-, Sprach-, Audio- und/oder Videoinformationen werden von wenigstens einem Anbieter bzw. einem dritten Teilnehmer über das Telekommunikationsnetz, gegebenenfalls über Internet zur Datenbank des Dienstleisters übertragen.

Zur Kostenentlastung werden die gebührenfrei an die rufenden Teilnehmer abgegebenen Informationen durch den Rechner des Dienstleisters registriert und die entsprechenden Kosten an den zu diesen Informationen korrespondierenden dritten Teilnehmer belastet.

Daten des rufenden Teilnehmers, an den die Informationen übertragen wurden, werden vom Rechner vorzugsweise an den zu diesen Informationen korrespondierenden Anbieter bzw. weiteren Teilnehmer übertragen, so dass den betreffenden rufenden Teilnehmern ergänzende Informationen, beispielsweise über das Internet, direkt zugestellt werden können.

Um den aktuellen Informationsbedarf des rufenden Teilnehmers besser berücksichtigen zu können, wird diesem vorzugsweise die Möglichkeit zur Eingabe von Daten bzw. Mitteilungen gegeben, anhand denen der Service Provider oder der Informationsanbieter die relevanten Informationen selektieren und übertragen kann.

Das erfindungsgemässe Verfahren kann mit beliebigen stationären oder mobilen Endgeräten und Datenterminals, insbesondere Sprachendgeräten, so beispielsweise ISDN-, GSM-, UMTS-, oder DECT-, aber auch mit klassischen analogen Telekommunikationsendgeräten oder einfachen Funkgeräten durchgeführt werden. Das erfindungsgemässe Verfahren ist vorzugsweise auch mit Geräten anwendbar, die nach dem bekannten Wireless Application Protocol (WAP) arbeiten (beispielsweise Nokia 7110).

Die Erfindung wird nachstehend anhand einer Zeichnung näher erläutert. Dabei zeigt:
- Fig. 1: ein öffentliches Telekommunikationsnetz mit einer erfindungsgemässen Vermittlungsstelle eines Service Providers und
- Fig. 2: eine Darstellung der Informationsflüsse in einem mit einer erfindungsgemässen Vermittlungsstelle versehenen Telekommunikationsnetz, das aus verschiedenartigen Netzen zusammengefügt ist.

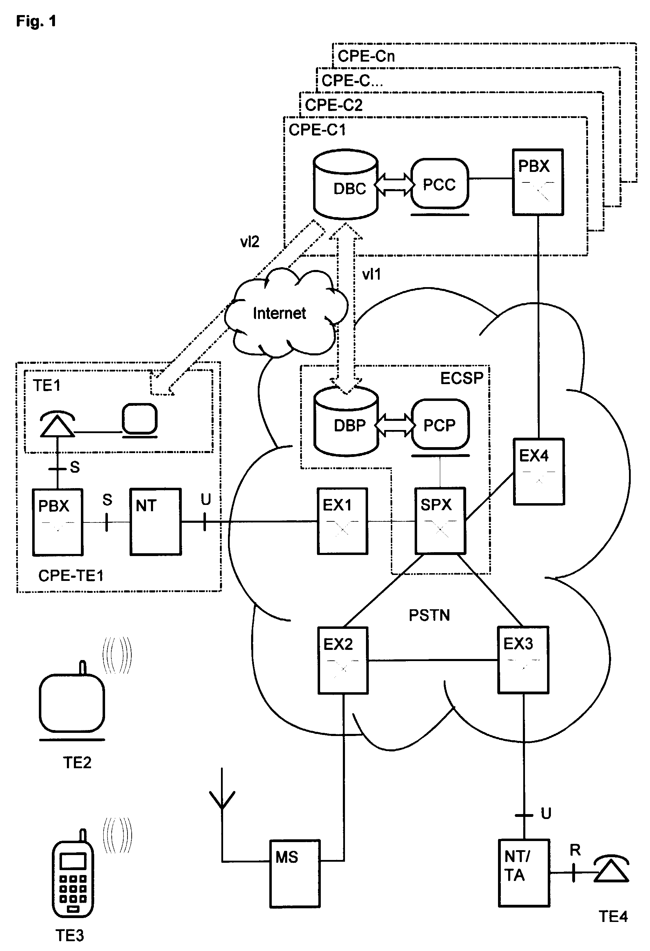

Figur 1 zeigt ein öffentliches, beispielsweise nach den für das ISDN (Integrated Services Digital Network) geschaffenen Empfehlungen (ITU-T, gegebenenfalls ITU-R) der International Telecommunication Union (ITU) normiertes digitales Telekommunikationsnetz PSTN, das über vorgesehene Teilnehmeranschlüsse Sprach-, Text-, Daten-, Video- und Multimediakommunikation erlaubt (siehe [1], Seite 2, Bild 1.1).

An das Telekommunikationsnetz PSTN sind Teilnehmer TE1, ..., TEn sowie C1, ..., Cn angeschlossen, die beim ISDN über den sogenannten D-Kanal zum Aufbau von Verbindungen benötigte Signalisierungssignale mit dem Telekommunikationsnetz PSTN austauschen (siehe [1], Kapitel 4.4.4, Seiten 122-131). Endgeräte, die zur digitalen Signal-verarbeitung und Ankopplung an digitale Netzwerke wie ISDN geeignet sind, sind beispielsweise in [1], Kapitel 5.1, Seiten 165-179 beschrieben. Aus [1], Bild 5.5 ist ersichtlich, dass beim Anschluss eines Sprachendgeräts an einen ISDN-Basisanschluss in einer Spracheinheit die über wenigstens einen von zwei Nutz- bzw. B-Kanälen übertragenen Nutzinformationen und in einer Steuereinheit die über den D-Kanal übertragenen Signalisierungsdaten verarbeitet werden. Aus [1], Bild 5.5 ist weiter ersichtlich, dass beim Anschluss eines Sprach- und Bild-Endgeräts (Bildtelefon) empfangene Sprach- und Bildinformationen in einem Demultiplexer getrennt und über einen Audio- bzw. Videodekoder entsprechenden Ausgabeeinheiten zugeführt werden.

In der in Fig. 1 gezeigten Anordnung verfügt der Teilnehmer TE1 über ein solches, leitungsgebundenes Bildtelefon.

Die Teilnehmer TE2 und TE3 verfügen über mobile Endgeräte, die beispielsweise zur Verarbeitung von Sprach- und Bildinformationen geeignet sind. Mobilfunkkommunikation und die Kopplung von Funknetzen mit dem ISDN ist beispielsweise in [1], Kapitel 9.1 beschrieben (siehe Bild 9.2 und Bild 9.3). Das Endgerät des Teilnehmers TE2 ist beispielsweise ein mit einem Funkmodul versehener tragbarer Personalcomputer (Notebook), der zur Multimediakommunikation geeignet ist. Der Teilnehmer TE3 verfügt über ein Mobilfunktelefon, welches vorzugsweise ebenfalls zur Multimediakommunikation geeignet ist.

Der Teilnehmer TE4 verfügt über ein analoges (POTS-) Sprachendgerät welches über ein mit einem Terminaladapter versehenes Netzabschlussgerät NT/TA mit dem Telekommunikationsnetz PSTN verbunden ist. Netzabschlussgeräte und die diesbezüglichen Schnittstellen S, T und U sind in [1], Kapitel 4.1, Seiten 77-83 beschrieben. In [1], Seite 83, Bild 4.6 ist gezeigt, dass auch Nebenstellenanlagen (in der Figur mit PBX bezeichnet) Netzabschlussfunktionen aufweisen können.

Zur Durchschaltung der Verbindungen zwischen Teilnehmern TE1, ..., TEn sind im Telekommunikationsnetz PSTN Vermittlungsstellen EX1, ..., EXm vorgesehen. Die Signalisierung zwischen den Vermittlungsstellen EX1, ..., EXm (Zwischenamtssignalisierung) im Telekommunikationsnetz PSTN erfolgt beim ISDN nach dem ITU-T Signalisierungssystem Nr. 7, bei welchem, im Unterschied zur teilnehmerseitig verwendeten D-Kanal-Signalisierung, ein zentraler Zeichengabekanal verwendet wird (siehe [1], Kapitel 6.3, Seiten 215-229, beispielsweise Bild 6.10 oder Bild 6.11 oder [2], Kapitel 2.6.6, Seiten 106-107).

Eine Vermittlungsstelle SPX eines für den Aufbau von Sonderverbindungen befähigten Dienstleisters ECSP (z.B. E-Commerce Service Provider) wird vorzugsweise ebenfalls mittels dem ITU-T Signalisierungssystem Nr. 7 in das Telekommunikationsnetz PSTN eingebunden, wodurch sich normalerweise Vorteile in bezug auf Leistung und Kosten ergeben.

Die Vermittlungsstelle SPX kann ferner bei einem Internet Access Provider (ECSP mit Internet Access Services) angeordnet sein, der mit Teilnehmern TE vorzugsweise über optische Kabel-TV Leitungen verbunden ist.

Die Durchführung des erfindungsgemässen Verfahrens funktioniert in einer vorzugsweisen Ausgestaltung wie folgt. Zum Aufbau von Sonderverbindungen zwischen zwei an das Telekommunikationsnetz PSTN angeschlossenen Teilnehmern TE1; ...; TEn wird ein rufender Teilnehmer TE1, nach Eingabe der entsprechenden Zieladresse bzw. Rufnummer, zuerst mit der zum Aufbau von Sonderverbindungen geeigneten, über einen Rechner PCP mit einer Datenbank DBP verbundenen Vermittlungsstelle SPX verbunden, welche während einer ersten Zeitdauer in der Datenbank DBP gespeicherte Informationen an den rufenden Teilnehmer TE1 überträgt und vorzugsweise nach Übertragung der Informationen von der Datenbank DBP, gegebenenfalls nach Eingabe einer weiteren Rufnummer, eine während einer zweiten Zeitdauer gebührenfreie Verbindung zu einem gerufenen Teilnehmer TEn erstellt.

Als Kompensation für die Entgegennahme von Informationen vom Service Provider ECSP, die in der Datenbank DBP im Auftrag eines Dritten bzw. eines Datenlieferanten CPE-C1, ..., CPE-Cn gespeichert wurden, erhält der rufende Teilnehmer TE1 für eine zweite Zeitdauer somit eine gebührenfreie Verbindung zum gerufenen Teilnehmer TEn.

Zu Beginn der ersten Zeitdauer wird der rufende Teilnehmer TE1 mittels der Vermittlungsstelle SPX daher mit dem Rechner PCP verbunden, durch den ausgewählte Informationen von der Datenbank DBP des Dienstleisters ECSP an den rufenden Teilnehmer TE1 übertragen werden. Vorzugsweise wird die Nummer des rufenden Teilnehmers (calling party number) ausgewertet und davon abhängig die zu übertragende Informationen von der Datenbank selektiert. Die Informationen werden vorzugsweise in Abhängigkeit der Übertragungsart, der Netzwerkeigenschaften, des Endgeräts des rufenden Teilnehmers TE1, der Region, der Sprache in dieser Region, der Tageszeit und/oder des Datums selektiert. Sofern der rufende Teilnehmer TE über ein Bildtelefon oder einen Personalcomputer verfügt, werden vorzugsweise Multimediadaten übertragen. Da Informationen gegebenenfalls nur regional von Bedeutung sind, erfolgt die Auswahl vorzugsweise in Abhängigkeit der Vorwahl der Rufnummer (calling party number) des rufenden Teilnehmers TE1.

Sofern Daten des rufenden Teilnehmers bereits in der Datenbank DBP abgelegt sind, werden diese Daten vorzugsweise vom Rechner PCP ausgelesen und mit dazu korrespondierenden Teilnehmer-Informationen verknüpft. Auf diese Weise können dem rufenden Teilnehmer TE1 besonders relevante Informationen zugesandt werden.

Selektierbare Daten-, Text-, Sprach-, Audio- und/oder Videoinformationen werden von der Datenbank DBC eines oder mehrerer weiterer Teilnehmer CPE-C1, ..., CPE-Cn bzw. Informationsanbieter über das Telekommunikationsnetz PSTN, gegebenenfalls über Internet, zur Datenbank DBP des Dienstleisters ECSP übertragen und vorzugsweise regelmässig aktualisiert.

Zur Kostenentlastung des Dienstleisters ECSP wird die Abgabe der gebührenfrei an die rufenden Teilnehmer TE1, ..., TEn übertragenen Informationen durch den Rechner PCP registriert und die entsprechenden Kosten an den zu diesen Informationen korrespondierenden weiteren Teilnehmer CPE-C1; ...; CPE-Cn belastet.

Daten, insbesondere die Rufnummer, des rufenden Teilnehmers TE1, an den Informationen übertragen wurden, werden vom Rechner PCP des Dienstleisters ECSP vorzugsweise an den zu den abgegebenen Informationen korrespondierenden weiteren Teilnehmer CPE-C1; ...; CPE-Cn übertragen, so dass dieser dem betreffenden rufenden Teilnehmer TE1 ergänzende Informationen, beispielsweise über das Internet, direkt übertragen kann.

Um den aktuellen Informationsbedarf des rufenden Teilnehmers TE1 besser berücksichtigen zu können, wird diesem vorzugsweise die Möglichkeit zur Eingabe von Daten bzw. Mitteilungen gegeben, anhand denen die Selektion von zu übertragenden Informationen bzw. die spätere Selektion von vom weiteren Teilnehmer CPE-C1; ...; CPE-Cn direkt zu übertragenden weiteren Informationen erfolgen kann.

Sofern der rufende Teilnehmer TE1 wünscht, die Verbindung auch nach Ablauf der gebührenfreien zweiten Zeitdauer während einer dritten Zeitdauer aufrecht zu erhalten, werden Gebühren durch die Vermittlungsstelle SPX und den Rechner PCP des Dienstleisters ECSP in dieser dritten Zeitdauer registriert und dem rufenden Teilnehmer TE1 belastet.

Nach Ablauf der zweiten Zeitdauer können in einer weiteren ersten Zeitdauer wiederum Informationen vom Dienstleister ECSP an den rufenden, vorzugsweise auch an den gerufenen Teilnehmer TE1; TEn übertragen werden. Dazu wird die Verbindung zwischen den Teilnehmern TE1, TEn getrennt, je eine Verbindung zwischen den Teilnehmern TE1, TEn und dem Rechner PCP des Dienstleisters ECSP erstellt, wonach, gegebenenfalls nach Auswertung der Rufnummer der gerufenen Teilnehmers TEn (called party number), entsprechend selektierte Informationen an den rufenden und den gerufenen Teilnehmer TE1; TEn übertragen werden. Anschliessend wird für eine weitere zweite Zeitdauer wieder eine gebührenfreie Verbindung zwischen den Teilnehmern TE1, TEn erstellt.

Die Reihenfolge der ersten und zweiten Zeitdauer kann, planmässig festgelegt oder zufällig gewechselt werden, so dass der rufende Teilnehmer TE1 gegebenenfalls vor Abgabe von Informationen vom Dienstleisters ECSP mit dem gerufenen Teilnehmer TEn verbunden wird. Vorzugsweise wird dem rufenden Teilnehmer TE1, vor oder nach der Übertragung der Informationen von der Datenbank DBP des Dienstleisters ECSP daher eine Gebührengutschrift auf dem Gebührenkonto gutgeschrieben, so dass der rufende Teilnehmer TE1 nach Erstellung der Verbindung mit der zum Aufbau von Sonderverbindungen geeigneten Vermittlungsstelle SPX, durch eine Vorselektion, wahlweise Informationen abholen oder zu Lasten seines Gebührenkontos eine Verbindung zu einem gerufenen Teilnehmer TEn erstellen lassen kann.

Ein Gebührenkonto wird durch den Rechner PCP des Dienstleisters ECSP vorzugsweise beim ersten Anruf erstellt, indem die Nummer des rufenden Teilnehmers TE1 (calling party number) ausgewertet und ein mit dieser Nummer verknüpftes Konto erstellt wird. In einer vorzugsweisen Ausgestaltung der Erfindung kann auch ein Konto für den gerufenen Teilnehmer TEn eröffnet werden, indem die Nummer des gerufenen Teilnehmers TEn (called party number) ausgewertet und ein mit dieser Nummer verknüpftes Konto erstellt wird. Dadurch kann bei einem Anruf sowohl dem rufenden als auch dem gerufenen Teilnehmer TE1; TEn eine Gutschrift auf das jeweilige Konto übertragen werden.

Vorzugsweise erfolgt nach Eröffnung eines Kontos eine automatische Kontaktaufnahme des Dienstleisters ECSP mit den entsprechenden Teilnehmern TE1; TEn, mittels der über die Eröffnung eines Kontos informiert wird. Beispielsweise wird dazu von einer Datenbank eine zur Nummer des rufenden oder gerufenen Teilnehmers korrespondierende e-mail Adresse oder Internetadresse ausgelesen.

Die einzelnen Verfahrensschritte bzw. Verfahrensmodule in vorzugsweisen Ausgestaltungen der Erfindung sind daher folgende:
A → Zieladresse, Vorkennzeichen oder Rufnummer des Dienstleisters ECSP wählen;
B →
   - erste Zeitdauer:: Aufbau der Verbindung mit dem Rechner PCP des Dienstleisters ECSP und Übertragung selektierter Informationen an den rufenden Teilnehmer TE1;
C → Hauptnummer bzw. Rufnummer des gerufenen Teilnehmers TEn wählen;
D →
   - zweite Zeitdauer:: Aufbau einer gebührenfreien Sonderverbindung zwischen dem rufenden und dem gerufenen Teilnehmer TE1 bzw. TEn;
E →
   - dritte Zeitdauer:: Aufbau einer gebührenpflichtigen Verbindung zwischen dem rufenden und dem gerufenen Teilnehmer TE1 bzw. TEn;
F → registrieren einer Gutschrift auf dem Gebührenkonto des rufenden Teilnehmers TE1.

Die Verfahrensschritte A, B, C, D, E und F treten vorzugsweise in den in nachstehender Tabelle angegebenen Reihenfolgen auf. In der ersten Spalte ist die Nummer des Verfahrens angegeben; in die weiteren Felder einer Zeile sind die dem angegebenen Verfahren zugehörigen Verfahrensschritte in der festgelegten Reihenfolge angegeben. Nicht notwendigerweise vorgesehene Schritte sind in Klammern angegeben; alternativ wählbare Schritte sind durch Schrägstriche getrennt:

**Tabelle 1**

| | | | | | | | |
|---|---|---|---|---|---|---|---|
| Nr. 1 | A | B | C | D | (B) | (D) | (E) |
| Nr. 2 | A/C | C/A | B | D | (B) | (D) | (E) |
| Nr. 3 | A/C | C/A | D | B | (D) | (E) | |
| Nr. 4 | C* | B | D | (B) | (D) | (E) | |
| Nr. 5 | C* | D | B | (D) | (E) | | |
| Nr. 6 | B* | A/C | C/A | D | (B) | (D) | |
| Nr. 7 | B* | C | D | (B) | (D) | | |
| Nr. 8a | A | B | F | (B) | (F) | | |
| Nr. 8b | A | C | D | (E) | | | |
| Nr. 9 | A/C | C/A | (F) | D | B | (F) | (D/E) |
| Nr. 10 | A/C | C/A | B | (F) | D | (F) | (D/E) |
| Nr. 11 | C* | B | (F) | D | (B) | (D) | (E) |
| Nr. 12 | C* | (F) | D | B | (F) | (D) | (E) |
| Nr. 13 | B* | (F) | A | C | D | (B) | (D) |

Die Verfahren Nr. 4 bis Nr. 7 sind Spezialfälle, bei denen der rufende Teilnehmer TE1 bei Eingabe einer Rufnummer (Nr. 4 und Nr. 5) oder bereits beim Abheben des Hörers (Nr. 6 und Nr. 7) stets mit dem Dienstleister ECSP verbunden wird. Entsprechende Verfahren zur Erstellung von Verbindungen sind in [1], Seite 127, Bild 4.27 dargestellt. Der Aufbau einer Verbindung (SETUP) erfolgt dabei mit dem Rechner PCP (Bild 4.27, gerufenes Endgerät x). Bei den Verfahren Nr. 8 bis Nr. 13 wird vor oder nach Abhören der Informationen jeweils eine Gutschrift auf dem Gebührenkonto des rufenden Teilnehmers TE1 registriert. Zusätzlich ist der Verfahrensschritt der Vorselektion zu berücksichtigen, durch den der rufende Teilnehmer zu Lasten seines Gebührenkontos direkt oder erst nach dem Empfang von Informationen vom Dienstleister ECSP mit dem gerufenen Teilnehmer verbunden wird.

In einer vorzugsweisen Ausgestaltung der Erfindung erfolgt die Gebührengutschrift oder der Aufbau einer gebührenfreien Verbindung nur dann, wenn der rufende Teilnehmer TE1 den Abschluss der Informationsübertragung korrekt quittiert. Beispielsweise wird nach Abschluss der Informationsübertragung eine Meldung übertragen, durch die der rufende Teilnehmer TE1 aufgefordert wird, vorzugsweise innerhalb einer festgelegten Zeit eine Quittung in Form eines Sprachsignals oder einer Tastenkombination einzugeben. In einer weiteren vorzugsweisen Ausgestaltung erfolgt ein Dialog während der Informationsübertragung, so dass der rufende Teilnehmer TE1 zu einem beliebigen Zeitpunkt zur Eingabe eines Sprachsignals oder einer Tastenkombination aufgefordert wird, die als Quittierung interpretiert wird.

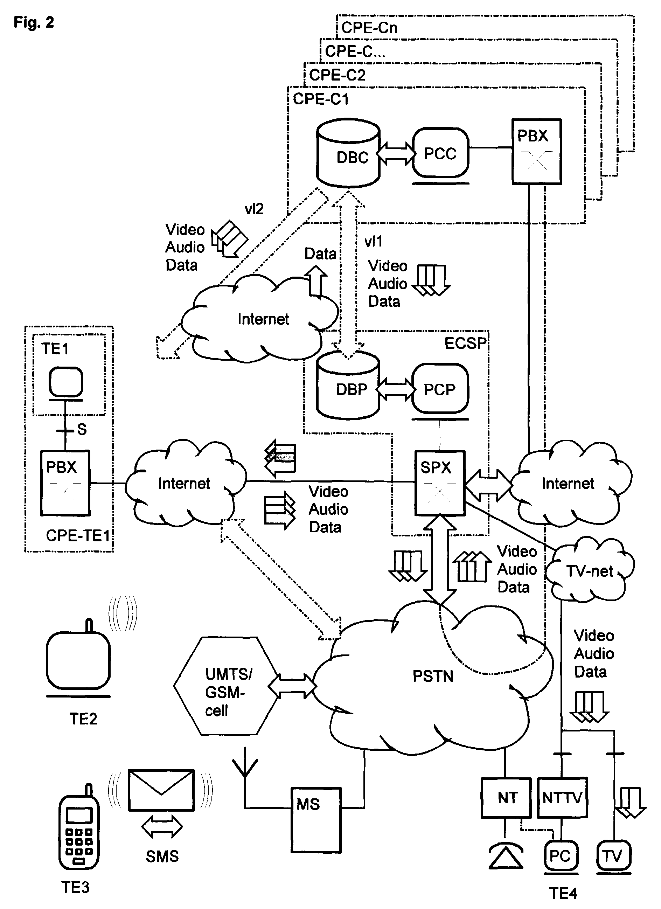

Figur 2 zeigt eine detailliertere Darstellung der Informations- und Datenflüsse in einem mit einer erfindungsgemässen Vermittlungsstelle SPX versehenen Telekommunikationsnetz, das aus verschiedenartigen Netzen (Funknetz GSM/UMTS, Telefonnetz PSTN bzw. ISDN, paketvermittelndes Netz (Internet) / Kabel-TV Netz) zusammengefügt ist. Teilnehmer TE1 ist über das Internet, das gegebenenfalls in ein öffentliches Telekommunikationsnetz PSTN (beispielsweise das ISDN) eingebunden ist, mit der Vermittlungsstelle SPX des Dienstleisters ECSP verbunden. Die Teilnehmer TE2, TE3, die vorzugsweise über mobile Multimediageräte (z.B. WAP bzw. Notebook) verfügen, sind über eine Zelle (UMTS/GSM cell) des Mobilfunknetzes GSM/UMTS und das öffentliche Telekommunikationsnetz PSTN mit der Vermittlungsstelle SPX des Dienstleisters ECSP verbunden. Der Teilnehmer TE4 verfügt über ein an das öffentliche Telekommunikationsnetz PSTN angeschlossenes Sprachendgerät sowie einen Personalcomputer PC, der über eine Netzabschlusseinheit NTTV und das Kabel-TV-Netzwerk (TV-net) mit der Vermittlungsstelle SPX des Dienstleisters ECSP verbunden ist.

Informationen vom Dienstleister ECSP werden den Teilnehmern TE1, ..., TE4 im Rahmen der Leistungsmerkmale der verwendeten Endgeräte sowie der Eigenschaften der Netzwerke vorzugsweise in beliebig wählbarer Form übertragen. Beispielsweise kann ein Teilnehmer TE Video-, Audio- und/oder Textinformationen empfangen und dafür eine Zeit- oder Gebührengutschrift für eine Verbindung erhalten, mittels der Sprach-, Video-, Audio- und/oder Textinformationen von und/oder zu einem gerufenen Teilnehmer TEn übertragen werden. Zu einem konventionellen Mobilendgerät ist unter anderem auch die Übertragung von auf der Short Message Service (SMS) Norm basierenden Mitteilungen möglich, nach deren Empfang der Teilnehmer eine gebührenfreie Verbindung für die Übertragung einer SMS-Mitteilung oder zur Führung eines Gesprächs erhält. Zu einem WAP-Endgerät kann der Dienstleister ECSP beispielsweise e-mails übertragen.

Die Verbindung kann leitungsvermittelt oder paketvermittelt sein. Die Verbindung wird für eine bestimmte Zeitdauer erstellt, die entweder fest gewählt oder abhängig von einer limitierten Datenmenge ist (z.B. 5 Mbytes), die kostenlos übertragen werden kann.

Die Erfindung erlaubt zudem die Nutzung aller Kommunikationsmöglichkeiten, die durch die genutzten Netze zur Verfügung gestellt werden.

In einer vorzugsweisen Ausgestaltung der Erfindung werden vom Dienstleister ECSP zusätzliche Nutzinformationen angeboten, die von den Teilnehmern ausgewählt werden können und kostenlos oder vergünstigt über die Verbindung übertragen werden. Beispielsweise werden Nachrichten, Börseninformationen, Musiktitel oder Filmtitel angeboten (Audio/Video on demand). Der vom rufenden Teilnehmer TE gerufene Teilnehmer ist in diesem Fall gemäss oben verwendeter Terminologie der Dienstleister ECSP selbst, von dem benötigte Informationen abgerufen werden.
[1] Peter Bocker, ISDN-Digitale Netze für Sprach-, Text-, Daten-, Video- und Multimediakommunikation, Springer Verlag, Berlin 1997
[2] Andrew S. Tanenbaum, Computer Networks, Prentice-Hall Inc., New Jersey 1989
[3] Andrew S. Tanenbaum, Computernetzwerke, Prentice-Hall Inc., München 1998, 3. Auflage
[4] United States Patent 6,075,783 (Voit)
[5] M. Korpi & V. Kumar, Supplementary Services in the H.323 IP Telephony Network, IEEE Communications Magazine, July 1999

## Patentansprüche

1. Verfahren zum Aufbau von Sonderverbindungen zwischen zwei an ein Telekommunikationsnetz angeschlossenen Teilnehmern (TE1, ..., TEn), die wahlweise über eine zum Aufbau von Sonderverbindungen geeignete Vermittlungsstelle (SPX) eines Dienstleisters (ECSP) miteinander verbunden werden, **dadurch gekennzeichnet**, dass ein rufender Teilnehmer (TE1), nach Eingabe einer entsprechenden Rufnummer oder Zieladresse, zuerst mit der zum Aufbau von Sonderverbindungen geeigneten, über einen Rechner (PCP) mit einer Datenbank (DBP) verbundenen Vermittlungsstelle (SPX) verbunden wird, welche in der Datenbank (DBP) gespeicherte Informationen selektiert, während einer ersten Zeitdauer an den rufenden Teilnehmer (TE1) überträgt und, vor oder nach Übertragung der Informationen von der Datenbank (DBP), eine Gutschrift auf ein Gebührenkonto des rufenden Teilnehmers (TE1) überträgt oder, gegebenenfalls nach Eingabe einer weiteren Rufnummer oder Zieladresse, eine während einer zweiten Zeitdauer gebührenfreie Verbindung zu einem gerufenen Teilnehmer (TEn) erstellt.

2. Verfahren nach Anspruch 1, **dadurch gekennzeichnet**, dass die von der Datenbank (DBP) selektierbaren Informationen, die Daten, Text-, Sprach-, Audio- und/oder Video-informationen enthalten, von wenigstens einem dritten Teilnehmer (CPE-C1, ..., CPE-Cn) über das Telekommunikationsnetz gegebenenfalls über Internet zur Datenbank (DBP) des Dienstleisters (ECSP) übertragen werden.

3. Verfahren nach Anspruch 1 oder 2, **dadurch gekennzeichnet**, dass die Informationen von der Datenbank (DBP) in Abhängigkeit der Nummer oder Adresse des rufenden Teilnehmers (TE1), der Übertragungsart, der Netzwerkeigenschaften, der Eigenschaften des Endgeräts des rufenden Teilnehmers (TE1), der Region, der Sprache, der Tageszeit und/oder des Datums selektiert werden.

4. Verfahren nach Anspruch 1, 2 oder 3, **dadurch gekennzeichnet**, dass die gebührenfrei an den rufenden Teilnehmer (TE1, ..., TEn) abgegebenen und auf deren leitungsgebundenen oder drahtlosen Endgerät wiedergegeben Informationen durch den Rechner (PCP) registriert und die entsprechenden Kosten an den zu diesen Informationen korrespondierenden dritten Teilnehmer (CPE-C1, ..., CPE-Cn) belastet werden.

5. Verfahren nach einem der Ansprüche 1 bis 4, **dadurch gekennzeichnet**, dass Daten des rufenden Teilnehmers (TE1), an den die Informationen übertragen wurden, vom Rechner (PCP) an den zu diesen Informationen korrespondierenden dritten Teilnehmer (CPE-C1, ..., CPE-Cn) übertragen werden.

6. Verfahren nach Anspruch 5, **dadurch gekennzeichnet**, dass der dritte Teilnehmer (CPE-C1, ..., CPE-Cn) weitere Informationen an den rufenden Teilnehmer (TE1), dessen Daten vom Rechner (PCP) dem dritten Teilnehmer (CPE-C1, ..., CPE-Cn) übertragen wurden, über das Telekommunikationsnetz (PSTN), gegebenenfalls über Internet, direkt übermittelt.

7. Verfahren nach einem der Ansprüche 1 bis 6, **dadurch gekennzeichnet**, dass der rufende Teilnehmer (TE1) Mitteilungen an den Rechner (PCP) überträgt, die als Kriterien für die Selektion von Informationen von der Datenbank (DBP) des Dienstleisters (ECSP) oder vom dritten Teilnehmers (CPE-C1, ..., CPE-Cn) als Kriterien für die Selektion von Informationen von einer Datenbank (DBC) verwendet werden.

8. Verfahren nach einem der Ansprüche 1 bis 7, **dadurch gekennzeichnet**, dass die Gebühren der Verbindung zum gerufenen Teilnehmer (TE2, ..., TEn) in einer dritten Zeitdauer registriert und dem rufenden Teilnehmer (TE1) belastet werden und/oder dass nach Übertragung weiterer Informationen an den rufenden, gegebenenfalls auch an den gerufenen Teilnehmer (TE1 bzw. TE2, ..., TEn) in einer zusätzlichen ersten Zeitdauer, die Verbindung während einer zusätzlichen zweiten Zeitdauer gebührenfrei aufrechterhalten wird.

9. Verfahren nach einem der Ansprüche 1 bis 8, **dadurch gekennzeichnet**, dass der rufende Teilnehmer (TE1) nach Erstellung einer Verbindung mit der Vermittlungsstelle (SPX) des Dienstleisters (ECSP) wahlweise Informationen von der Datenbank (DBP) abholen oder zu Lasten seines Gebührenkontos eine Verbindung zu einem gerufenen Teilnehmer (TEn) erstellen lassen kann.

10. Verfahren nach einem der Ansprüche 1 bis 9, **dadurch gekennzeichnet**, dass vor oder nach Übertragung der Informationen von der Datenbank (DBP) ein Gebührenkonto für den rufenden und/oder den rufenden Teilnehmer (TE1; TEn) mit Bezug auf die zugehörige Adresse eröffnet wird.

11. Verfahren nach einem der Ansprüche 1 bis 10, **dadurch gekennzeichnet**, dass während oder nach Übertragung der Informationen von der Datenbank (DBP) Meldungen an den rufenden Teilnehmer (TE1) übertragen werden, nach deren korrekter Quittierung gegebenenfalls innerhalb einem Zeitfenster eine Gutschrift auf ein Gebührenkonto übertragen und/oder eine gebührenfreie Verbindung erstellt wird.

12. Verfahren nach einem der Ansprüche 1 bis 11, **dadurch gekennzeichnet**, dass der Teilnehmer (TE1) nach Übertragung der Informationen von der Datenbank (DBP) Daten, wie Video-, Audio- und/oder Text-Informationen in einem zulässigen Format wie SMS gebührenfrei über die erstellte Verbindung übertragen kann.

13. Telekommunikationssystem zur Durchführung des Verfahrens nach einem der Ansprüche 1 bis 12 mit einer Vermittlungsstelle (SPX) eines Dienstleisters (ECSP), die für den Aufbau von Sonderverbindungen zwischen zwei an ein Telekommunikationsnetz angeschlossenen Teilnehmern (TE1, ..., TEn) geeignet ist, **dadurch gekennzeichnet**, dass die Vermittlungsstelle (SPX)
a) über einen Rechner (PCP) mit einer Datenbank (DBP) verbunden ist, der Informationen eines dritten Teilnehmers (CPE-C1, ..., CPE-Cn) über das Telekommunikationsnetzwerk zuführbar sind,
b) mittels dem Rechner (PCP) zur Selektion und Übertragung der in der Datenbank (DBP) abgelegten Informationen an wenigstens einen rufenden Teilnehmer (TE1) vorgesehen ist und
c1) vor oder nach der Übertragung der Informationen an den rufenden Teilnehmer (TE1) zum Aufbau einer gebührenfreien Verbindung zwischen dem rufenden und einem gerufenen Teilnehmer (TE1 bzw. TE2, ..., TEn) oder
c2) zur Speicherung einer Gutschrift auf ein Gebührenkonto des rufenden Teilnehmers (TE1) vorgesehen ist.

14. Telekommunikationssystem nach Anspruch 13, **dadurch gekennzeichnet**, dass die Teilnehmer (CPE-C1, ..., CPE-Cn; TE1, ..., TEn) über ein leitungsvermittelndes öffentliches Telekommunikationssystem (PSTN/ISDN) mittels festen Verbindungen, über paketvermittelnde Netzwerke (Internet), über ein Mobilfunknetz (GSM/UMTS) und/oder über ein Kabel-TV Netz mit der Vermittlungsstelle (SPX) verbunden sind.

15. Telekommunikationssystem nach Anspruch 13 oder 14, **dadurch gekennzeichnet**, dass zwischen den Teilnehmern (TE1, ..., TEn) und der Vermittlungsstelle (SPX) Daten, Text-, Sprach-, Audio- und/oder Videoinformationen in einer Richtung oder bidirektional übertragbar sind.
